# EUROPEAN PATENT APPLICATION

(11) **EP 1 900 556 A1**
(43) Date of publication of application: **19.03.2008**
(21) Application number: 06766629.7
(22) Date of filing: 13.06.2006
(51) Int. Cl.: B60H 1/00

(54) **AIR CONDITIONER UNIT FOR VEHICLE**

(30) Priority: 14.06.2005 JP 2005173911
(71) Applicant: Calsonic Kansei Corporation, Tokyo 164-8602 (JP)
(72) Inventor: ONO, Masato c/o Calsonic Kansei Corporation, Tokyo 164-8602 (JP)
(74) Representative: Schuster, Thomas
(86) International application number: PCT/JP2006/311817
(87) International publication number: WO 2006/134905

(57) **Abstract**

A vehicular air conditioning unit includes an air-mix chamber (9) configured to mix cool air and hot air, the air-mix chamber (9) includes: a cool air inlet (5b); a hot air inlet (14b); a center vent outlet passage (21); and a side vent outlet passage (20), wherein the cool air inlet (5b) is divided into a first cool air opening portion (6) and a second cool air opening portion (7), the center vent outlet passage (21) is disposed opposite one of the first cool air opening portion (6) and the second cool air opening portion (7) across the air-mix chamber (9), and the side vent outlet passage (20) is disposed opposite the other of the first cool air opening portion (6) and the second cool air opening portion (7) across the air-mix chamber.

## Description

### TECHNICAL FIELD

The present invention relates to a vehicular air conditioning unit mainly used for an automobile.

### BACKGROUND ART

According to a conventional air conditioning unit (for example, see Japanese Patent Application Laid-Open No. 2001-310612), a unit case formed with a defroster opening, a vent opening, and a foot opening incorporates an cooling heat exchanger and a heating heat exchanger. Conditioned air (cool air, hot air, or mixed air) is discharged from the openings of the unit case into a passenger compartment of a vehicle.

The vent opening comprises a side vent opening in front and a center vent opening in back. The side vent opening discharges the conditioned air, via side vent ducts, into the passenger compartment from side vent outlets located in right and left ends of an instrument panel. The center vent opening discharges the conditioned air, via a center vent duct, into the passenger compartment from a center vent outlet located in a center portion of the instrument panel.

Under the side vent opening and the center vent opening, an air-mix chamber is provided. Under the air-mix chamber, a cool air passage is provided. Between the air-mix chamber and the cool air passage, and a partition wall having a cool air opening is provided. The cool air opening is opened and closed by an air-mix door.

### DISCLOSURE OF THE INVENTION

However, the cool air is introduced into the air-mix chamber via the single cool air opening and divided into two flows to be discharged through the two vent openings. In the air-mix chamber, a disturbed flow (a turbulent flow) is generated and this causes an uneven air distribution between the side vent opening and the center vent opening.

The present invention provides a vehicular air conditioning unit configured to maintain an even air distribution between a side vent opening and a center vent opening.

An aspect of the present invention is a vehicular air conditioning unit, including an air-mix chamber configured to mix cool air and hot air, the air-mix chamber including: a cool air inlet configured to introduce the cool air into the air-mix chamber therethrough, the cool air inlet divided into a first cool air opening portion and a second cool air opening portion; a hot air inlet configured to introduce the hot air into the air-mix chamber therethrough; a center vent outlet passage configured to discharge the mixed air from the air-mix chamber toward a center portion of a front seat in a passenger compartment; and a side vent outlet passage configured to discharge the mixed air from the air-mix chamber toward side portions of the front seat in the passenger compartment, the center vent outlet passage disposed opposite one of the first cool air opening portion and the second cool air opening portion across the air-mix chamber, and the side vent outlet passage disposed opposite the other of the first cool air opening portion and the second cool air opening portion across the air-mix chamber.

Another aspect of the present invention is a vehicular air conditioning unit, including: a hot air passage configured to include a heating heat exchanger interiorly therein and having an outlet for discharging hot air passing through the heating heat exchanger; a cool air passage configured to include a cooling heat exchanger interiorly therein and having an outlet for discharging cool air passing through the cooling heat exchanger, the outlet of the cool air passage including an inlet of the hot air passage and a cool air opening for bypassing the hot air passage, the cool air opening being divided into a first cool air opening portion and a second cool air opening portion; an air-mix chamber configured to mix hot air and cool air at a confluence of the cool air opening and the outlet of the hot air passage; a center vent outlet passage diverging from the air-mix chamber and configured to discharge air toward a center portion of a front seat in a widthwise direction of the vehicle; and a side vent outlet passage diverging from the air-mix chamber and configured to discharge air toward side portions of the front seat in a widthwise direction of the vehicle, the center vent outlet passage disposed opposite one of the first cool air opening portion and the second cool air opening portion across the air-mix chamber, and the side vent outlet passage disposed opposite the other of the first cool air opening portion and the second cool air opening portion across the air-mix chamber.

### BRIEF DESCRIPTION OF THE DRAWINGS

FIG. 1 is a vertical sectional view of an air conditioning unit according to an embodiment of the present invention;
FIG. 2 is a sectional view of the air conditioning unit taken along SA-SA line in FIG. 1;
FIG. 3 is a cross-sectional view of the air conditioning unit in a full cool mode;
FIG. 4 is a cross-sectional view of the air conditioning unit in a full hot mode; and
FIG. 5 is a cross-sectional view of the air conditioning unit in an air-mix mode.

### BEST MODE FOR CARRYING OUT THE INVENTION

An embodiment of the present invention will be described with reference to the accompanying drawings.

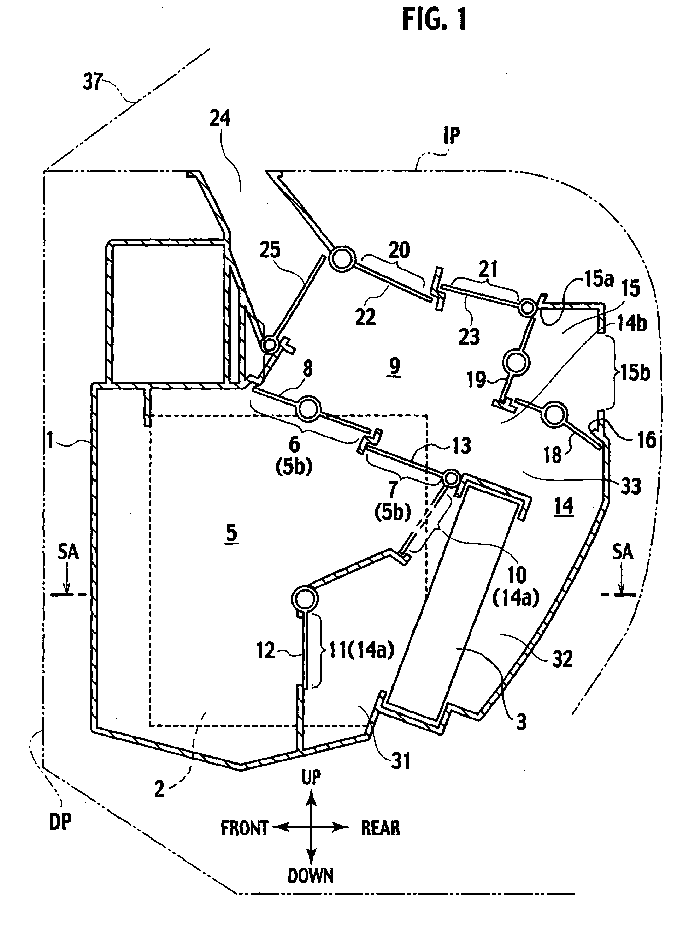

Figs. 1 to 5 are diagrams showing an embodiment of the present invention. An air conditioning unit according to the present embodiment is mounted to a vehicle and located in front of an instrument panel IP and in back of a dash panel DP in a front section of a passenger compartment of the vehicle. A unit case (housing) 1 of the air conditioning unit has a compact structure which incorporates an evaporator 2 as a cooling heat exchanger and a heater core 3 as a heating heat exchanger. Above the unit case 1, a fan (not shown) is provided.

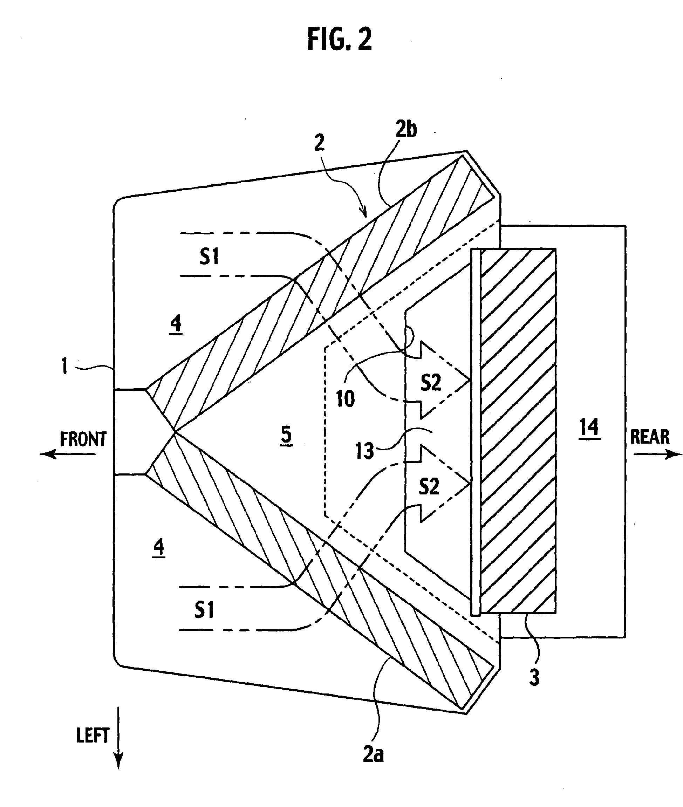

The evaporator 2 is provided so as to form a V-shape that diverges backwardly. The V-shaped evaporator 2 comprises a pair of upright plate-like evaporators 2a, 2b. Air inlet portions 4 (Fig. 2) are formed between outer surfaces of the evaporators 2a, 2b and inner surfaces of the unit case 1. The fan directs air S1 downwardly to the air inlet portions 4.

The downwardly directed air S1, sent from the air inlet portions 4, passes through the evaporators 2a, 2b and converted into cool air S2. Between inner surfaces of the evaporators 2a, 2b, a space, which is in the shape of a substantially triangular prism, is formed as a cool air passage 5. The cool air S2 passing through the evaporators 2a, 2b is accumulated and concentrated toward the center portion of the cool air passage 5 and flows in the cool air passage 5.

Above the cool air passage 5, an air-mix chamber 9 is provided on the other side of a substantially horizontal partition wall formed with a cool air opening 5b as an outlet of the cool air passage 5. The cool air passage 5 and the air-mix chamber 9 communicate with each other via the cool air opening 5b. The cool air opening 5b is divided into a front cool air opening portion 6 as a first cool air opening portion and a rear cool air opening portion 7 as a second cool air opening portion.

At the back of the cool air passage 5, a hot air passage 14 is provided on the other side of a substantially vertical partition wall formed with a hot air passage inlet 14a as an outlet of the cool air passage 5. The cool air passage 5 and the hot air passage 14 communicate via the inlet 14a. The inlet 14a of the hot air passage 14 is divided into an upper inlet 10 and a lower inlet 11 with a predetermined distance therebetween.

The front cool air opening portion 6 has a butterfly-type full cool door 8 as a first cool air door so as to open and close the front cool air opening portion 6. The rear cool air opening portion 7 and the upper inlet 10 of the hot air passage 14 are adjacent to each other, by a substantially right angle. Between the rear cool air opening portion 7 and the upper inlet 10, an air-mix door 13 as a second cool air door is pivotally provided so as to open and close the rear cool air opening portion 7 and the upper inlet 10. The air-mix door 13 is adjustable to any angle so that the angle of the air-mix door 13 establishes a distribution of cool air S2 between the rear cool air opening portion 7 and the upper inlet 10. The lower inlet 11 of the hot air passage 14 has a full hot door 12 so as to open and close the lower inlet 11.

In the hot air passage 14, the heater core 3 is provided. The hot air passage 14 is curved so as to form a C-shape and includes a backwardly extending passage 31, an upwardly extending passage 32, and a forwardly extending passage 33. The backwardly extending passage 31 is disposed downstream the inlet 14a and upstream the heater core 3 and is directed toward a backside of the vehicle. The upwardly extending passage 32 is disposed downstream the backwardly extending passage 32 and the heater core 3 and is facing the heater core and is directed upwardly. The forwardly extending passage 33 is disposed downstream the upwardly extending passage 32 and above the heating heat exchanger, and is directed toward a front side of the vehicle. A front end of the forwardly extending passage 33, as an outlet 14b of the hot air passage 14, communicates with the air-mix chamber 9 and is adjacent to the cool air opening 5b (6, 7).

As shown in FIG. 1, the air-mix chamber 9 is formed in a substantial rectangular shape along a vertical cross-section. In the air-mix chamber 9, hot air S3 from the hot air passage outlet 14b and cool air S2 from the cool air passage outlet 5b (the cool air opening) are mixed. A defroster outlet passage 24, a side vent outlet passage 20, a center vent outlet passage 21, and a foot outlet passage 15 diverge from the air-mix chamber 9. The side vent outlet passage 20 and the center vent outlet passage 21 are formed as openings that are opened in an upper wall of the unit case 1. The defroster outlet passage 24 and the foot outlet passage 15 are defined by partition walls in the unit case 1.

The defroster outlet passage 24 is configured to discharge air to a front windshield panel 37 and side windshield panels (not shown). The center vent outlet passage 21 is configured to be connected to a center vent duct (not shown) and discharge air, via the center vent duct, toward a center portion of the front seat in the vehicle's widthwise direction. The side vent outlet passage 20 is configured to be connected to a right side vent duct (not shown) and a left side vent duct (not shown) and discharge air, via the side vent ducts, toward both sides of a front seat in the vehicle's widthwise direction. The foot outlet passage 15 is configured to be connected to a foot duct (not shown) and discharge air, via the foot duct, toward the feet of the front seat passengers.

The side vent outlet passage 20 and the center vent outlet passage 21 are located above the air-mix chamber 13 and form a line along the vehicle's longitudinal direction. The side vent outlet passage 20 and the center vent outlet passage 21 correspond and are opposed to the front cool air opening portion 6 and the rear cool air opening portion 7, respectively. The front cool air opening portion 6 and the side vent outlet passage 20 are disposed opposite each other and have substantially the same opening areas. Also, the rear cool air opening portion 7 and the center vent outlet passage 21 are disposed opposite each other and have substantially same opening areas. The side vent outlet passage 20 has a side vent door 22 so as to open and close the side vent outlet passage 20. The center vent outlet passage 21 has a center vent door 23 so as to open and close the center vent outlet passage 21.

The defroster outlet passage 24 is formed in front of the vent outlet passages 20, 21. The defroster outlet passage 24 has a defroster door 25 so as to open and close the defroster passage 24.

The foot outlet passage 15 is formed in back of the side vent outlet passage 20 and the center vent outlet passage 21. An inlet 15a of the foot outlet passage 15, which faces the air-mix chamber 9, has a foot door 19. When the foot door 19 is opened, air from the air-mix chamber 9 is discharged from an outlet 15b via the foot outlet passage 15.

The foot outlet passage 15 communicates with the midstream of the hot air passage 14 (in this example, an upper end of the upwardly extending passage 32 of the hot air passage 14) via a hot air bypass opening 16, in addition to the air-mix chamber 9 via the inlet 15a, as described above. The hot air bypass opening 16 has a hot air bypass door 18 so as to open and close the hot air bypass opening 16. When the hot air bypass door 18 is opened, air from the hot air passage 14 directly flows to the foot outlet passage 15 without flowing though the mixing chamber 9.

Next, operation of the present embodiment will be explained. It is noted that, in the following explanation, descriptions related to the foot outlet passage 15 and the defroster outlet passage 24 are omitted. A case of discharging air (cool air S2, hot air S3, and mixed air S4) when the side vent outlet passage 20 and the center vent outlet passage 21 are opened will be explained.

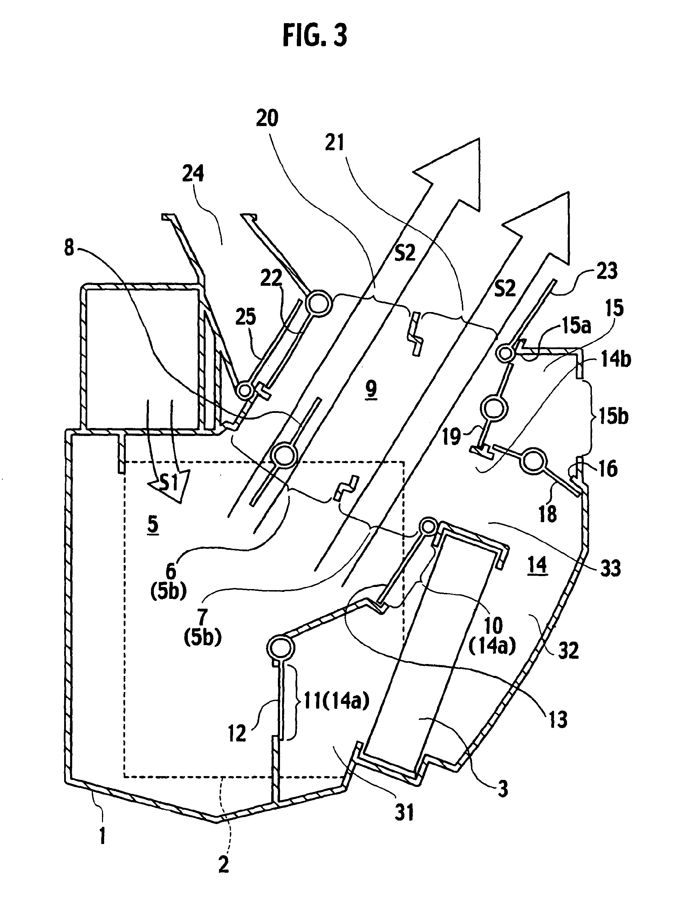

### Full cool mode (FIG. 3):

In a full cool mode, the lower inlet 11 of the hot air passage 14 is closed by the full hot door 12 and the upper inlet 10 of the hot air passage 14 is closed by the air-mix door 13. The front cool air opening portion 6 and the rear cool air opening portion 7 are opened. Accordingly, cool air S2 which passes through the evaporator 2 and is accumulates in the cool air passage 5 flows through the air-mix chamber 9 via the front cool air opening portion 6 and the rear cool air opening portion 7, and is discharged from the side vent outlet passage 20 and the center vent outlet passage 21, respectively.

Here, the front cool air opening portion 6 corresponds to the side vent outlet passage 20 and the rear cool air opening portion 7 corresponds to the center vent outlet passage 21, so that substantially parallel independent airflows are generated between each of the corresponding openings. Cool air S2 is divided into a flow toward the side vent outlet passage 20 and a flow toward the center vent outlet passage 21 and is discharged from the side vent outlet passage 20 and the center vent outlet passage 21 as controlled flows. Accordingly, the volume of the air flowing to the side vent outlet passage 20 and the center vent outlet passage 21 is not variable and a constant volume of air can always be obtained.

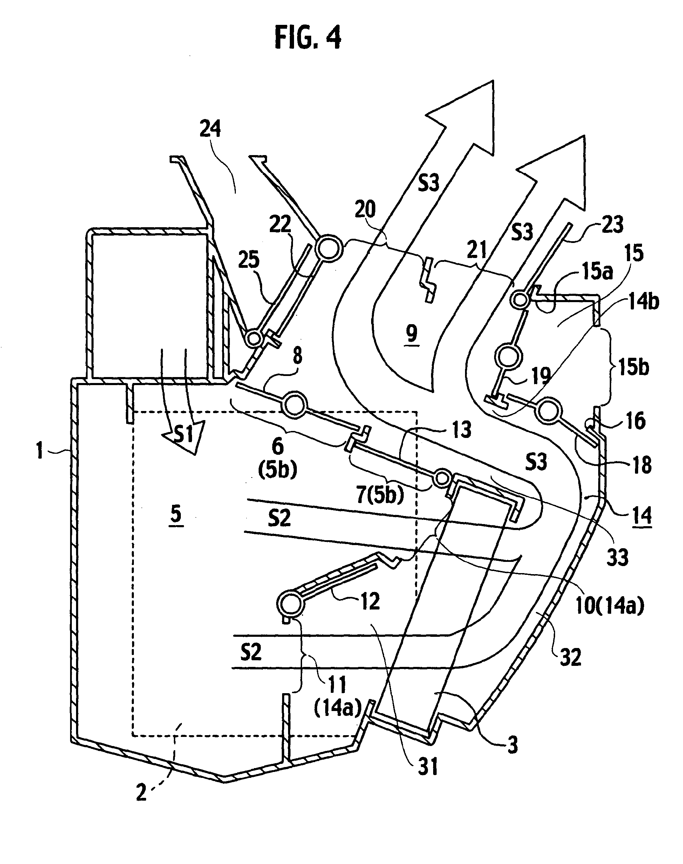

### Full hot mode (FIG. 4):

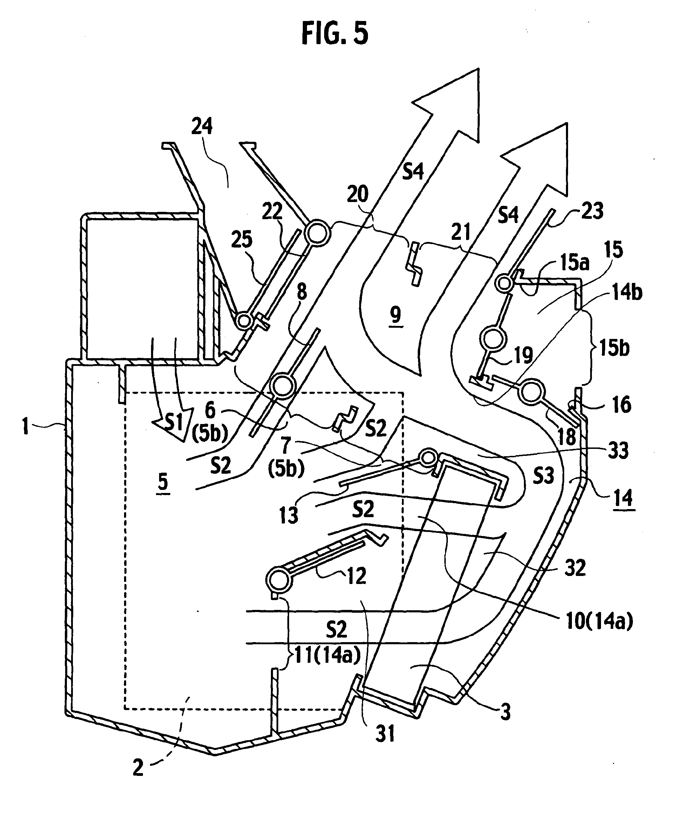

In a full hot mode, the front cool air opening portion 6 is closed by the full cool door 8 and the rear cool air opening portion 7 is closed by the air-mix door 13. The upper inlet 10 and the lower inlet 11 of the hot air passage 14 are opened. Accordingly, all cool air S2 which passes through the evaporator 2 and accumulated in the cool air passage 5 flows through the heater core 3 and becomes hot air S3. The hot air S3 is discharged from the side vent outlet passage 20 and the center vent outlet passage 21 via the hot air passage 14 and the air-mix chamber 9. In the full hot mode, the path to the air-mix chamber 9 is longer than that in the case of the full cool mode. Accordingly, turbulent flow due to a large volume of fast flowing air, as seen in the case of a full cool mode in a conventional air conditioning unit, is prevented. As a result, a constant volume of relatively stable hot air S3 is discharged from the side vent outlet passage 20 and the center vent outlet passage 21. Air-mix mode (FIG. 5):

In an air-mix mode, the front cool air opening portion 6 and the lower inlet 11 of the hot air passage 14 are opened. The rear cool air opening portion 7 and the upper inlet 10 of the hot air passage 14 are opened by an amount determined by the angle of the air-mix door 13. Cool air S2 passing through the front cool air opening portion 6 and the rear cool air opening portion 7 and hot air S3 passing through the upper inlet 10 and the lower inlet 11 are mixed in the air-mix chamber 9. The mixed air S4 is discharged from the side vent outlet passage 20 and the center vent outlet passage 21. Accordingly, turbulent flow due to a large volume of fast flowing air, as seen in the case of a full cool mode in a conventional air conditioning unit, is prevented. As a result, a constant volume of relatively stable mixed air S4 is discharged from the side vent outlet passage 20 and the center vent outlet passage 21.

Characteristics of the present embodiments are as follows.

According to a vehicular air conditioning unit of the present embodiment, the vehicular air conditioning unit includes an air-mix chamber 9 configured to mix cool air and hot air. The air-mix chamber 9 includes: a cool air inlet 5b (a cool air opening 5b) configured to introduce the cool air into the air-mix chamber 9 therethrough; a hot air inlet 14b (an outlet 14b of an hot air passage) configured to introduce the hot air into the air-mix chamber 9 therethrough; a center vent outlet passage 21 configured to discharge the mixed air from the air-mix chamber 9 toward a center portion of a front seat in a passenger compartment; and a side vent outlet passage 20 configured to discharge the mixed air from the air-mix chamber 9 toward side portions of the front seat in the passenger compartment. The cool air inlet 5b is divided into a first cool air opening portion 6 (a front cool air opening portion 6) and a second cool air opening portion 7 (a rear cool air opening portion 7). The first cool air opening portion 6 is opposite one of the vent outlets 21, 20, and the second cool air opening portion 7 is opposite the other of the vent outlet 21, 20 across the air-mix chamber 9.

With this arrangement, cool air S2 flowing from the first cool air opening portion 6 to the side vent outlet passage 20 and cool air S2 flowing from the second cool air opening portion 7 to the center vent outlet passage 21 generate independent airflows substantially in parallel so as not to be a turbulent flow (FIG. 3). Therefore, cool air S2 is distributed equally to the side vent outlet passage 21 and the center vent outlet passage 20.

According to a vehicular air conditioning unit of the present embodiment, the vehicular air conditioning unit includes: a hot air passage 14 configured to include a heating heat exchanger 3 therein and having an outlet 14b for discharging hot air passing through the heating heat exchanger 3; a cool air passage 5 configured to includes a cooling heat exchanger 2 therein and having an outlet 5b, 14a for discharging cool air passing through the cooling heat exchanger 2, the outlet of the cool air passage 5 including an inlet 14a of the hot air passage 14 and a cool air opening 5b for bypassing the hot air passage 14, the cool air opening 5b divided into a first cool air opening portion 6 and a second cool air opening portion 7; a first cool air door 8 (a full cool door 8) configured for opening and closing the first cool air opening portion 6; a second cool air door 13 (an air-mix door 13) configured for opening and closing the second cool air opening portion 7; an air-mix chamber 9 configured for mixing hot air and cool air at a confluence of the cool air opening 5b and the outlet 14b of the hot air passage 14; a center vent outlet passage 21 diverging from the air-mix chamber 9 and configured to discharge air toward a center portion of a front seat in vehicle's widthwise direction; and a side vent outlet passage 20 diverging from the air-mix chamber 9 and configured to discharge air toward side portions of the front seat in vehicle's widthwise direction. The center vent outlet passage 21 is disposed opposite one of the cool air opening portions 6, 7 across the air-mix chamber 9, and the side vent outlet passage 20 is disposed opposite the other of the cool air opening portions 6, 7 across the air-mix chamber 9.

With this arrangement, cool air S2 flowing from the first cool air opening portion 6 to the side vent outlet passage 20 and cool air S2 flowing from the second cool air opening portion 7 to the center vent outlet passage 21 generate independent airflows substantially in parallel so as not to be a turbulent flow (FIG. 3). Therefore, cool air S2 is distributed equally to the side vent outlet passage 21 and the center vent outlet passage 20.

According to the vehicular air conditioning unit of the present embodiment, the center vent outlet passage 21 and the side vent outlet passage 20 are arranged to form a line along the vehicle's longitudinal direction. The first cool air opening portion 6 and the second cool air opening portion 7 are arranged to form a line along the vehicle's longitudinal direction under the center vent outlet passage 21 and the side vent outlet passage 20.

With this arrangement, the side vent outlet passage 20 corresponds to the first cool air opening portion 6 and the center vent outlet passage 21 corresponds to the second cool air opening portion 7.

According to the vehicular air conditioning unit of the present embodiment, the inlet 14a of the hot air passage 14 is provided in back of the cool air passage 5 in the vehicle's longitudinal direction. The cool air opening 5b is provided in front of the inlet 14a of the hot air passage 14 in the vehicle's longitudinal direction and above the inlet 14a of the hot air passage 14. The second air opening portion 7 of the cool air opening 5b is provided in back of the first cool air opening portion 6 of the cool air opening 5b in the vehicle's longitudinal direction. The inlet 14a of the hot air passage includes an upper inlet 10 and a lower inlet 11, and the second cool air door 13 rotates between the second cool air opening portion 7 and the upper inlet 10 so as to open and close the second cool air opening portion 7 and the upper inlet 10.

With this arrangement, the second cool air door 13 is allowed to open and close two openings (the second air opening portion 7 and the upper inlet 10) so that the number of doors can be reduced. Therefore, manufacturing cost is reduced.

According to the vehicular air conditioning unit of the present embodiment, the cooling heat exchanger 2 is formed in a V-shape diverging from an upwind side toward a downwind side of the heat exchanger 2.

With such a V-shaped cooling heat exchanger 2, a larger airflow face of the cooling heat exchanger 2 can be provided in a limited sectional area of the airflow passage so as to improve cool performance.

According to the vehicular air conditioning unit of the present embodiment, the V-shaped cooling heat exchanger 2 comprises a pair of plate-like heat exchangers 2a, 2b so as to form the V-shape.

With this arrangement, the V-shaped cooling heat exchanger 2 can be composed of a simple structure.

According to the vehicular air conditioning unit of the present embodiment, the cooling heat exchanger 2 is formed in a V-shape diverging toward a rear side of the vehicle, and the heating heat exchanger 3 is provided in back of the V-shaped cooling heat exchanger 2 in the vehicle's longitudinal direction.

With such V-shaped cooling heat exchanger 2, an effective arrangement of the air conditioning unit can be obtained.

According to the vehicular air conditioning unit of the present embodiment, at least a part of the cool air opening 5b is provided in a substantially triangular prism shaped space, as an inner space of the V-shaped cooling heat exchanger 2.

With this arrangement, the unit case 1 can be made compact so that the overall vehicular air conditioning unit can be made compact.

According to the vehicular air conditioning unit of the present embodiment, at least a part of the inlet 14b of the hot air passage is provided in a substantially triangular prism shaped space as an inner space of the V-shaped cooling heat exchanger 2.

With this arrangement, the unit case 1 can be made compact so that the overall vehicular air conditioning unit can be made compact.

According to the vehicular air conditioning unit of the present embodiment, at least a part of the heating heat exchanger 3 is provided in a substantially triangular prism shaped space as an inner space of the V-shaped cooling heat exchanger 2.

With this arrangement, the unit case 1 can be made compact so that the overall vehicular air conditioning unit can be made compact.

According to the vehicular air conditioning unit of the present embodiment, a portion of the hot air passage 14 that is downstream the heating heat exchanger 3 is curved so as to form a L-shape. The L- shape portion includes an upwardly extending passage 32 which is downstream the heating heat exchanger 3 and faces the heating heat exchanger 3 in back thereof, and a forwardly extending passage 33 which is downstream the upwardly extending passage 32 and is disposed above the heating heat exchanger 3. A front end of the forwardly extending passage 33, as the outlet 14b of the hot air passage, communicates with air-mix chamber 9.

With this arrangement, the unit case 1 can be made more compact in the vehicle's longitudinal direction so that the overall vehicular air conditioning unit can be made more compact.

According to the vehicular air conditioning unit of the present embodiment, the front end of the forwardly extending passage 33 as the outlet 14b of the hot air passage is adjacent to the cool air opening 5b.

With this arrangement, the unit case 1 can be made more compact in the vehicle's longitudinal direction so that the overall vehicular air conditioning unit can be made more compact.

### INDUSTRIAL ACTIVITY

Although the V-shaped evaporator 2 has been set forth in the above described embodiment, it will be appreciated that the evaporator 2 may be arranged in any polyhedral structure, such as a diverging shape, a U-shape or etc.

## Claims

1. A vehicular air conditioning unit, comprising:
an air-mix chamber configured to mix cool air and hot air, the air-mix chamber including:
a cool air inlet configured to introduce the cool air into the air-mix chamber therethrough, the cool air inlet divided into a first cool air opening portion and a second cool air opening portion;
a hot air inlet configured to introduce the hot air into the air-mix chamber therethrough;
a center vent outlet passage configured to discharge the mixed air from the air-mix chamber toward a center portion of a front seat in a passenger compartment; and
a side vent outlet passage configured to discharge the mixed air from the air-mix chamber toward side portions of the front seat in the passenger compartment,
the center vent outlet passage disposed opposite one of the first cool air opening portion and the second cool air opening portion across the air-mix chamber, and the side vent outlet passage disposed opposite the other of the first cool air opening portion and the second cool air opening portion across the air-mix chamber.

2. A vehicular air conditioning unit, comprising:
a hot air passage configured to include a heating heat exchanger interiorly therein and having an outlet for discharging hot air passing through the heating heat exchanger;
a cool air passage configured to include a cooling heat exchanger interiorly therein and having an outlet for discharging cool air passing through the cooling heat exchanger, the outlet of the cool air passage including an inlet of the hot air passage and a cool air opening for bypassing the hot air passage, the cool air opening being divided into a first cool air opening portion and a second cool air opening portion;
an air-mix chamber configured to mix hot air and cool air at a confluence of the cool air opening and the outlet of the hot air passage;
a center vent outlet passage diverging from the air-mix chamber and configured to discharge air toward a center portion of a front seat in a widthwise direction of the vehicle; and
a side vent outlet passage diverging from the air-mix chamber and configured to discharge air toward side portions of the front seat in a widthwise direction of the vehicle,
the center vent outlet passage disposed opposite one of the first cool air opening portion and the second cool air opening portion across the air-mix chamber, and the side vent outlet passage disposed opposite the other of the first cool air opening portion and the second cool air opening portion across the air-mix chamber.

3. The vehicular air conditioning unit according to Claim 2, wherein
the cooling heat exchanger is formed in a V-shape diverging toward a downwind side thereof.

4. The vehicular air conditioning unit according to Claim 3, wherein
the V-shaped cooling heat exchanger comprises two plate-like heat exchangers so as to form a V-shape.

5. The vehicular air conditioning unit according to Claim 2, wherein
the center vent outlet passage and the side vent outlet passage are arranged to form a line along a longitudinal direction of the vehicle, and
the first cool air opening portion and the second cool air opening portion are arranged to form a line along a longitudinal direction of the vehicle under the vent outlet passages.

6. The vehicular air conditioning unit according to Claim 2, further comprising:
a first cool air door configured to open and close the first cool air opening portion; and
a second cool air door configured to open and close the second cool air opening portion, wherein
the inlet of the hot air passage is provided in back of the cool air passage in vehicle's longitudinal direction,
the cool air opening is provided in front of the inlet of the hot air passage in vehicle's longitudinal direction and above the inlet of the hot air passage,
the second air opening portion of the cool air opening is provided in back of the first cool air opening portion of the cool air opening in vehicle's longitudinal direction,
the inlet of the hot air passage includes an upper inlet and a lower inlet, and
the second cool air door rotates between the second cool air opening portion and the upper inlet so as to open and close the second cool air opening portion and the upper inlet.

7. The vehicular air conditioning unit according to Claim 6, wherein
the cooling heat exchanger is formed in a V-shape diverging toward a rear side of the vehicle, and
the heating heat exchanger is provided in back of the V-shaped cooling heat exchanger in vehicle's longitudinal direction.

8. The vehicular air conditioning unit according to Claim 7, wherein
at least a part of the cool air opening is disposed in a substantially triangular prism shaped space as an inner space of the V-shaped cooling heat exchanger.

9. The vehicular air conditioning unit according to Claim 7, wherein
at least a part of the inlet of the hot air passage is disposed in a substantially triangular prism shaped space as an inner space of the V-shaped cooling heat exchanger.

10. The vehicular air conditioning unit according to Claim 7, wherein
at least a part of the heating heat exchanger is disposed in a substantially triangular prism shaped space as an inner space of the V-shaped cooling heat exchanger.

11. The vehicular air conditioning unit according to Claim 7, wherein
a portion of the hot air passage that is downstream the heating heat exchanger is curved so as to form an upwardly extending passage facing the heating heat exchanger in back thereof and a forwardly extending passage downstream the upwardly extending passage above the heating heat exchanger, and
a front end of the forwardly extending passage, as the outlet of the hot air passage, communicates with the air-mix chamber.
